# EUROPEAN PATENT SPECIFICATION

(11) **EP 1 365 977 B1**
(45) Date of publication and mention of the grant of the patent: **31.05.2006**
(21) Application number: 02710753.1
(22) Date of filing: 30.01.2002
(51) Int. Cl.: B65G 11/00

(54) **METHOD AND DUCT STRUCTURE FOR CARRYING IN A CONTROLLED MANNER A FALLING STREAM OF MATERIAL**
VERFAHREN UND KANALKONSTRUKTION ZUR KONTROLLIERTEN BEFÖRDERUNG EINES FALLENDEN MATERIALSTROMS
PROCEDE ET SYSTEME D'ACHEMINEMENT SERVANT A ACHEMINER DE MANIERE CONTROLEE UN FLUX DE MARCHANDISES DESCENDANT PAR GRAVITE

(30) Priority: 30.01.2001 DK 200100151
(43) Date of publication of application: 03.12.2003
(73) Proprietor: Jensen, Torben Hove, 8270 Hoejbjerg (DK)
(72) Inventor: Jensen, Torben Hove, 8270 Hoejbjerg (DK)
(74) Representative: Nielsen, Leif
(86) International application number: PCT/DK2002/000068
(87) International publication number: WO 2002/060790

(56) References cited:
- FR-A1- 2 453 090
- US-A- 6 041 906
- DATABASE WPI Week 9432, Derwent Publications Ltd., London, GB; AN 1994-261907/32, XP002950286 & RU 2 006 432 C1 (SOKOLOV S L) 30 January 1994

## Description

The present invention relates to a method for leading down in a controlled manner a falling stream of material or break bulk and to a duct structure for performing the method.

For moving break bulk over short distances, e.g. by loading ships and open rail cars, there is often used conveyor belts, shafts, bellows and the like. In some such devices, which are applied where the direction of movement is vertically or close to vertically downward, the break bulk moves in an approximately free fall. By simple devices there may thus be attained a great speed of displacement, but on the other hand the individual particles or parts of which the bulk is made are exposed to mechanical actions that may lead to crushing and dust formation. Crushing may be detrimental to keeping the quality of the break bulk, while dust is unwanted in the working environment as well as in the surroundings of the plant

In the following, the word "duct" or "duct structure" is used as a term for any device suited for delimiting, guiding or conducting a stream of break bulk of the kind indicated, and by this definition there is not made any limitation of the invention.

By the free, vertical fall of a body, the speed is continuously increasing, and the speed at any point of the course is proportional with the square root of the falling height covered. From this follows that the bulk particles, by moving through a free fall, will attain more kinetic energy the greater the height of the fall. Therefore, it may be obvious to divide the total fall way into sections, e.g. by ledges or similar introduced in the course of falling, or by forming the duct in a curved or spiralling shape. Such measures are prior art. From RU-C1-2006432 is known a method and equipment for transporting loads in buildings wherein speed of movement of load inside a sleeve is suppressed by elastic compression of wall material. The system comprises a tubular carrier arrangement of several elastic textile sleeves with entry and exit sections. Each sleeve is attached by its entry section to the structure of a building. The exit section of each sleeve lies freely inside the entry section of the next sleeve so that there is an overlap. The diameter of the entry section of the next sleeve is greater than the exit section. A load is placed in the entry section of the corresponding sleeve and as it moves down its speed of movement is suppressed the elastic transverse compression of the wall's elastic material. The speed of movement of the load is determined by a mathematical relationship. Doument RU-C1-2006432 is also available as a Derwent's abstract, No. 94-261907/32, week 9432, under the number XP-002950286. In a collection of particles sent through such a duct construction, the slowing occurs by increasing the mutual friction between the particles and between these and the duct walls. These kinds of friction have hardly any great significance for crushing and dust formation by a fall through a straight duct of sufficient width, but may achieve it in connection with inhibition of the free fall. To this comes that the greater slowing desired, the greater the required number of transverse plates or changes of direction and thereby the resulting number of dust sources in the course of fall will be. The mentioned measures for inhibiting the free fall may then only partly suppress crushing and dust formation, and thus a concurrent development of equipment for removing dust is also seen.

Document XP-002950286 (Derwent's abstract, No.94-261907/32, week 9432, Abstract of RU-C1-2006432 discloses a duct structure with the features in the preamble of Claim 1.

It is the object of the invention to indicate a method for performing a controlled leading down of material or break bulk safeguarding against a crushing/comminuting of the break bulk, and which additionally implies limitation of dust formation during transport of the material.

By the invention it has been realised, that an ideal method for performing the moving down through a duct will be a displacing in parallel of the break bulk with constant speed which is not greater than the amount of material supplied per time unit at the upper end of the duct. Hereby, the friction as well as the supplying of falling energy to the particles will be reduced to the least possible. A method for performing such a movement is indicated in claim 1.

Hereby is achieved that the material falls in small stages, implying that the speed attained by the material is limited as the material, by the periodical, stepwise deformation of the wall structure is slowed and falls to the next closed section. Thus there is performed a peristaltic downward movement which has appeared well suited for controlling the passage of the break bulk through the duct structure. Peristaltic movement is well-known from the bowels movement in animals and humans and from some pumps, cf. US 2.926.614, US 2.829.600 and US 3.588.054. By peristaltic tube pumps, the medium to be pumped is moved by supplying it to a tube acted on by a roller, and the roller squeezes the tube flat whereby the medium before it is displaced in its longitudinal direction. Such pumps require a certain fluidity and may therefore not be used for dry materials and break bulk, but only for gases and liquids and possibly pasty substances.

By the invention it is, however, shown that the peristaltic principle may as well be used for performing moving of dry materials when combined with the factor causing the problems described, the force of gravity, since its disadvantageous actions on the material by vertical or near vertical, downward movement in an approximately vertical duct structure is simultaneously reduced considerably by establishing sectionally complete or partial blocking of the duct cross-section, the blocking being controlled according to periodical time patterns.

In claim 2 there is indicated a duct structure for performing the method according to claim 1.

The possibility mentioned for sectional movement of the duct wall may be realised in different ways. Most advantageous is to let the duct wall be an unbroken surface of pliable material, but constructions with separate plates, segments etc. are also included by the invention. A typical embodiment will thus be a tube, thin-walled compared with the width and of pliable material, at the outer side of which there are a number of devices suited for producing the movements of the wall sections. These devices may e.g. be of mechanical, electric, hydraulic or pneumatic kind, and they may per se be movable or unmovable in the longitudinal direction of the duct.

A preferred embodiment of the duct structure is indicated in claim 3. The whole duct construction may in this case be viewed as a stack of bladders of annular shape or as a tube with double wall divided into bladders, as each bladder, however, can contain partitionings. In the uninflated state, each ring may readily be distended by the content of the duct so that the duct clear on the place in question is provided the greatest possible area in relation to the duct circumference. In the inflated state, a bladder will, however, fill out the duct section and block the passage of the break bulk. Now, the peristaltic movement is provided by the bladders being inflated and emptied in turn. The shorter each bladder section is made, the finer the peristaltics, i.e. the shorter the fall stages of the material becomes.

As mentioned in claim 6, it is to be noted that by controlling the inflation of the bladders it will thus be possible to regulate the fall length of the material before the next deceleration by an inflated bladder. This is done just by deactivating the inflation of one or more of the bladder sections situated under an active bladder.

In certain cases, it may be an advantage to make the cross-section of the duct elongated as the wall hereby gets a shorter movement by inflating than by e.g. a circular cross-section with the same area.

A further embodiment of the duct structure is indicated in claim 4, where the duct structure is constituted by annular bladders, as the part of the bladder forming the outer layer of the duct is constituted by a material which is less stretchable than or stable against stretching compared with the part of the annular bladders together forming the flexible inner layer, where the bladders each are in controlled connection with a pressure medium source via connection facilities in the outer layer for sectionally causing stepwise progressive deformation according to periodical time patterns of the inner layer for forming complete or partial blocking of the falling stream of break bulk.

In claim 5 is indicated a further embodiment of the duct structure, where the blockings of the material are performed by inflatable, flap-like sections on some of the annular bladders which are distributed over at least a part of the length of the duct structure.

In claim 7 is indicated that the annular bladders may be divided into sections with each section in controlled connection with a pressure medium source, whereby controlled directional deviations of the duct structure may be achieved by the detailed control of the inflation of the bladder section may be achieved.

In claim 8 is indicated a further preferred embodiment of the duct structure, where the duct structure may be formed by two pieces of thin-walled tubing of about the same diameter, of which one is pulled over the other. The tubes are interconnected with stable, possibly rigid annular joints, which divide the space between the two tube walls into bladders. By using seamless tubing as basic material for the making of the duct, one avoids to make elongated joints, but, on the other hand, by large tube dimensions there may be significant initiation costs for production equipment for the tubing.

Method of joining and material have to be adapted to each other. As method of joining i.a. there may be used welding, bonding, vulcanising, sewing and riveting, possibly a combination of several methods.

Highly elastic or less elastic, however pliable materials may be used for the wall. Use of a less elastic material requires, if the wall is to be smooth when the bladder is empty, that outer wall and inner wall have the possibility of moving symmetrically during inflating and emptying. As inflation of the outer wall may be unwanted, and since a less elastic wall easily gets areas with sharp creases reducing the durability, elastic materials are, however, preferred

As examples of suited materials may be mentioned film or membrane of thermoplastic polyurethane or of rubber, such as highly elastic natural rubber. With thermoplastic materials, the joints may be made by welding which is the fastest joining method. Welding cannot be used on vulcanised rubber. A duct of e.g. natural rubber may therefore either be made up of an unvulcanised rubber membrane as the joints only gets strength in connection with the vulcanisation of the entire duct, or it has to be made up of vulcanised membrane as the joints are made by bonding, possibly supplemented by sewing, riveting etc.

For counteracting inflation of the outer side of the duct, the outer wall may be made of thicker material than the inner wall, possibly with insets or lay-ons of ribbon, thread or woven fabric with high modulus of elasticity, e.g. of glass fibre or textile materials. Through hot pressing, weldable film and membrane provide easy access to making such laminated materials, also with insets at limited areas of arbitrary shape. Corresponding material may be produced of e.g. unvulcanised rubber membrane which is laid together with the inset material and then vulcanised.

The indicated preferred embodiments are not to be understood as limiting to the invention, neither with respect to symmetry, the distribution of the movable wall sections in the longitudinal direction of the duct, the movable fraction of the duct circumference of each section, nor the way in which the movement is produced. Thus, the invention also includes e.g. constructions with mutually displaced rows of bladders that each only cover a part of the circumference, constructions with bladders the movement of which are limited by non-moving, opposite wall sections, constructions with non-moving wall sections inserted in a row of movable sections and constructions in which there are built in bladders or other elements for regulating the length or curvature of the duct

With the object of directing the falling stream of break bulk to a plurality of material flows, the fall of which are controlled, the duct structure may be made as indicated in claim 9. This distribution may be advantageous in connection with distributing the mass flow in a hold where the branching of the flow of material implies a considerable work saving in that better possibility of depositing the flow of material along the sides of the hold appears. Besides, dividing the flow of material may be suitable in connection with mixing a part of this with another flow of material for forming a mixed product

In claim 10, facilities for collecting substreams from a plurality of duct structures according to the invention and thereby also for mixing substreams of break bulk are indicated.

By making the outer side and the inner side of the duct structure as indicated in claim 11, it is achieved that the size of the duct structure in axial direction may be regulated, which e.g. is of great significance when using the duct structure by loading holds on ships where the possibility of elevating the mouth of the duct structure gradually with the filling of the hold is important

The duct structure according to the invention may, as indicated in claim 12, include means for performing a bellow-like collapsing/extension over the entire or a part of the length dimension of the duct structure.

The means herefor may be very different, and in claims 13-16 there are indicated different preferred embodiment for these means.

The means indicated in claim 13 thus include a combination of ropes secured in a hoist, the ropes being passed through activatable and deactivatable gripping eyelets that are activated in turn for holding fast the duct structure during the axial collapsing and extension, respectively, of the latter.

It is to be mentioned, that the term rope is to be understood as actual rope, chain, belt, wire or other means for transmitting tensile forces.

In claim 14 there is indicated an embodiment where the duct structure includes projecting elements including gripping areas for interacting gripping devices of chain or belt structures hanging down from a hoisting unit in the suspension area, preferably evenly distributed around the periphery of the duct structure, so that the gripping devices and thereby the chain or belt structure are carrying the duct structure and perform axial displacement of the latter in a sliding movement, where guide means for the belt/chain structures in the suspension area ensure guiding and drawing free of the gripping devices in the collapsing area.

In claim 15, a second embodiment of the means for holding and changing the axial extension of the duct structure which employs a combination of stationary, selectively activatable and deactivatable gripping means, and a set of similarly activatable and deactivatable claw-shaped gripping/holding means which are suspended displaceably in parallel in the suspension area in relation to the axial extension of the duct structure, the holder and gripping means interacting with projecting elements with gripping areas on the periphery of the duct structure so that the gripping areas by displacing the claws in parallel engage the stationary gripping/holding means during a sectional hoisting of the duct structure.

In claim 16 there is indicated an embodiment, where, for hoisting, holding and sectional collapsing of the duct structure, there is used a plurality of selectively activatable and deactivatable sets of claw-shaped gripping/holding devices which in the suspension area are suspended displacable in parallel relative to the longitudinal direction of the duct structure, where the gripping/holding devices interacting with gripping areas on elements projecting from the outer wall of the duct, at least one set of claws being used for securing the duct structure, and so that collapsing of the duct structure is performed by a second set of claws being displaced for engaging the gripping area of the projecting member on the segment situated immediately under the feeding area, after which the set of claws is hoisted under collapsing of the duct structure, after which the set of claws situated above is displaced in parallel downward for engaging the gripping area on the succeeding element on the duct structure. In connection with performing an elongation of the duct structure by spreading out the collapsed sections, the above mentioned procedures are performed in the opposite sequence.

For controlling the valves for filling and emptying the bladders according to periodical time patterns, for stepwise progressive deformation of the inner layer, for formation of a complete or partial blocking of the falling or sliding flow of material, advantageously there may be used a control unit programmed in such a way that an operator determined operative length of the duct structure is effected by collapsing/extension of the duct structure by the interacting means therefor in the suspension area and on the duct structure, and furthermore so that the deformations of the inner layer in the collapsed parts of the duct structure are stopped.

The invention in explained more closely in the following with reference to the drawing, where:
- Fig. 1: is a side sectional view of a duct structure in extended position for leading down in a controlled manner break bulk according to the invention,
- Fig. 2: is a cross-sectional view of the duct structure along the line A-A shown in Fig. 1,
- Figs. 3 and 4: are an example of an embodiment of the duct structure,
- Fig. 5: is an example of a further embodiment of the duct structure where this is constituted by a series of annular bladders,
- Fig. 6: is a cross-sectional view along the line B-B of the duct structure shown in Fig. 5,
- Fig. 7: is a detail of a duct structure according to the invention for uniting/collecting a plurality of falling streams of break bulk into one falling stream,
- Fig. 8: is a detail of a duct structure according to the invention for dividing a falling stream of break bulk into a plurality of falling strearns,
- Fig. 9: is a detail of a first embodiment of a duct structure according to the invention in its suspension area,
- Fig. 10: is a partial cross-section of a second embodiment of a duct structure according to the invention in its suspension area,
- Figs. 11 and 12: show a partial cross-section of a third embodiment of a duct structure according to the invention in the suspension area thereof,
- Fig. 13: is a fourth embodiment of a duct structure according to the invention in the suspension area thereof,
- Fig. 14: is cross-sectional view along the line C-C in Fig. 13, and
- Fig. 15: is cross-sectional view along the line D-D in Fig. 13.

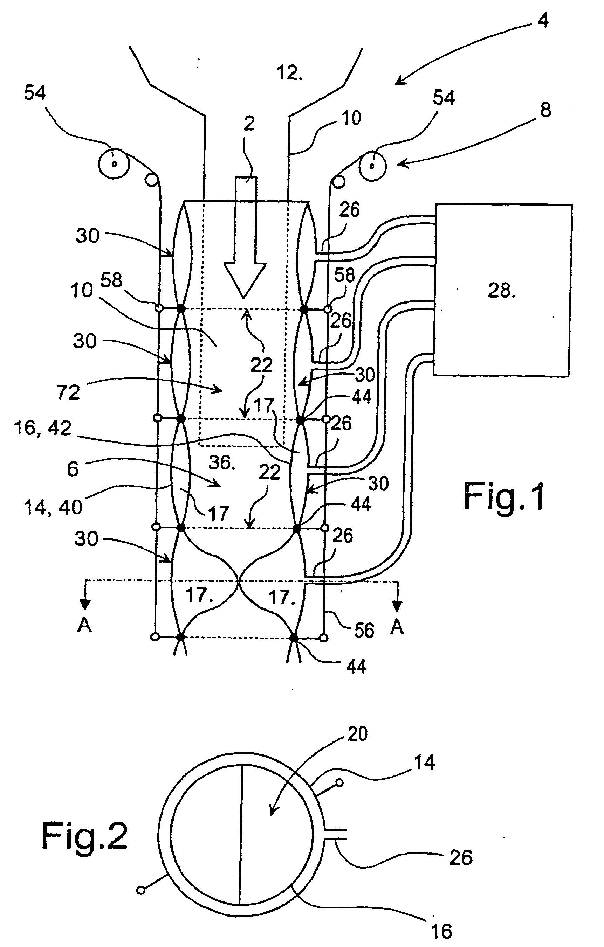

In Fig. 1 is shown a side sectional view of a duct structure 6 for use in controlled leading down of a falling stream 2 of break bulk according to the invention. The duct structure 6 is suspended in a suspension area 4 in a hoisting arrangement 8, so that the mouth of the duct structure encloses the discharge pipe 10 from a not closely specified feeding arrangement 12 situated above the former.

In the embodiment shown in Fig. 1, the duct structure 6 is constituted by an outer layer 14 and an inner layer 16, consisting of a tube with approximately the same diameter, of which the tube constituting the outer layer 14 is drawn over the tube constituting the inner layer 16. The duct structure 6 is divided into sections/elements 72 in that the outer wall of the inner layer 16 and the inner wall of the outer layer 14 are interconnected by annular joints 44, whereby the space 17 between the two tube walls 14, 16 is divided into bladders 30, and the duct structure may here be viewed as a stack of bladders 30 with annular shape or as a tube with double wall divided into bladders, as it is noted that each bladder 30 may containing partitionings. Via connection facilities 26 on the outer layer 14, the bladders 30 are in controlled connection with an extemal pressure medium source 28 as outlined in Fig. 1. In this connection it is to be mentioned, that by a controlled connection to a pressure medium source there is understood a connection also allowing discharge of air from the bladders. In the sections where the bladders 30 are not inflated, the duct structure 6 has the greatest possible diameter as each section will be inflated by the falling stream 2 of material. In the inflated state, a bladder 30 will fill out the duct cross-section 36, as outlined in Fig.1, and form a complete blocking 20 as shown in Figs. 1 and 2, or a partial blocking (not shown).

The construction shown in Figs. 1 and 2 is distinguished in that it may be made so that retracted wall sections form an almost completely smooth surface. This property is particularly easily achieved by a wall construction which during inflation and emptying of wall sections only allow the points of the wall surface to move perpendicularly to or nearly perpendicularly to the axis 9 of the duct structure.

By using seamless tubing as start material for making the duct, one avoids making longitudinal joints, but by great tube dimensions there may in return be considerable initiation costs for production equipment for the tubing.

Method of joining and material are to be adapted to each other. As method of joining may i.a. be used welding, bonding, vulcanising together, sewing and riveting, possibly a combination of these methods.

For the wall 14, 16, highly elastic or less elastic though pliable materials may be chosen. If the wall is to be smooth when the bladder 30 is empty, use of a less elastic material requires that an outer wall 14 and an inner wall 16 have the possibility of moving symmetrically during inflation and emptying. As the inflation of the outer wall 14 may be unwanted, and since a less elastic wall easily gets areas with sharp creases reducing the durability, flexible and/or elastic materials are, however, to be preferred.

As examples of particularly suited materials may be mentioned film or membrane of rubber, such as highly elastic natural rubber.

As suited materials, thermoplastic polyurethane may be indicated, but experiments have shown that this material in some situations show sluggishness with regard to movements, i.e. it does not return quickly enough to the starting position when emptying the bladder 30. The advantage of thermoplastic materials is that the joints may here be made by welding which is the fastest method of joining.

Welding cannot be used on vulcanised rubber. A duct of e.g. natural rubber may therefore either be made up of unvulcanised rubber membrane as the joints are only provided strength in connection the vulcanisation of the entire duct, or it may be built up from already vulcanised membrane, as the joints are made by bonding, possibly supplemented with sewing, riveting or similar.

For counteracting inflation of the outer side 14 of the duct, the outer wall may be made of thicker material than the inner wall, possibly with insets or lay-ons of ribbon, thread or woven fabric with high modulus of elasticity, e.g. of glass fibre or textile materials. Weldable film and membrane provide easy access to making such laminated material through hot pressing, also with insets in limited areas of arbitrary shape. Corresponding materials may be made of e.g. unvulcanised rubber membrane which is laid together with the inset material and then vulcanised.

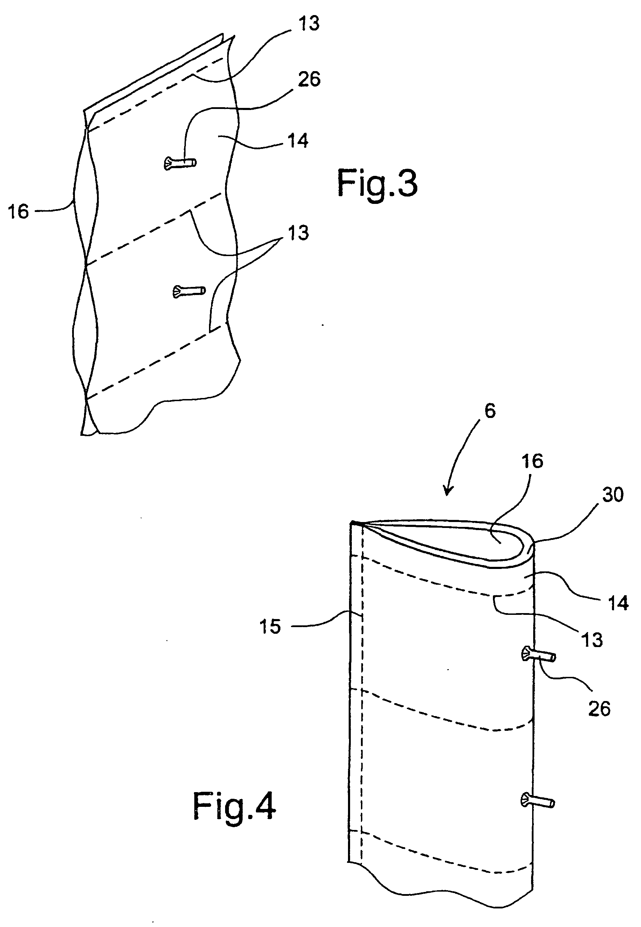

A practical way of embodying a duct structure 6 divided into bladders 30 but with unbroken wall faces 14, 16 is shown with main features in Figs. 3 and 4. The duct structure 6 is formed by two pieces of film, membrane or thin sheet of pliable material, 14, 16. In the outer wall 14 to come, firstly pipe stubs 26 are inserted for inflating and emptying the bladders. Then the two walls 14, 16 are joined along the dotted lines 13. Finally, the duct structure 6 with a longitudinal joint 15 is closed. Of the two original pieces of material 14, 16 there will be formed a row of closed, annular bladders 30 which together form the tubular duct structure 6.

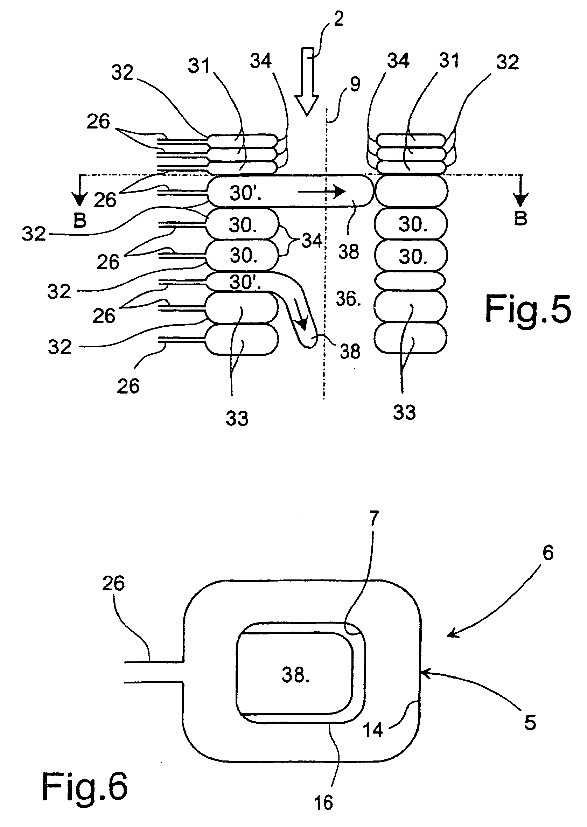

However, the invention also comprises duct constructions in which the movements of the wall sections may contain turning in relation to or displacement along the duct axis 9. An embodiment of such a construction of the duct structure 6 is seen in Figs. 5 and 6 which indicate a duct structure 6 made up of a series of interconnected annular bladders 30, which in unity form the outer and inner layer, respectively, as a first part 32 of the rings forms the outer side 5 of the duct structure and the facing side of the rings, and a second part 34 of the rings 30 in unity forms the inner side 7 of the duct structure. As it appears from Figs. 5 and 6, some, 30', of the annular bladders in the duct structure 6 comprise flap-like bladders 38 which by inflation via the connecting facilities 26, turn into the falling stream 2 of material, whereby this may be controlled. In Figs. 5 and 6 are shown how inflation of the flap-like bladders 38 implies turning under the transformation to inflated condition, 11. The turning is made clear by an arrow, the angle of which with the duct axis 9 is changed, as it is seen, during the inflating.

In the same duct there may be built in several such bladders, which in turn by inflation according to a suitable, periodical time pattern may be used for controlling the flow of material in a way similar to the above mentioned peristaltic movement, however, but now with stepwise downfall of the break bulk. The flap-like bladders may be placed singly as shown in Fig. 5, or in pairs opposite each other (not shown).

In Fig. 5 is also shown examples of building in elements for regulating the length of the duct in the form of bladders 30, which are shown as non-inflated 31 and inflated 30, respectively. It is to be pointed out that the directions of distending of an inflatable bladder (33) can be controlled by setting in non-stretchable material in the bladder wall corresponding to the directions in which distension is not wanted, cf. the above mentioned about laminated materials, forming the outer side, whereby it can be avoided that the length regulating bladders disturb the flow of material.

The embodiments shown in Figs. 3 - 6 are distinguished by their simplicity as the duct walls also are walls in the inflatable bladders which constitute the only motion actuators in the construction.

However, the invention may also be realised by constructions with a separate inner tubing of flexible material. Such inner tubing may facilitate the cleaning of the duct as the inner duct, which e.g. may be of cheap plastic film is just discarded after use. An exchangeable inner tubing may also be utilised for protecting the duct against wear.

In another, not shown embodiment of the duct structure according to the invention which does not function by bladders, the movements of the wall section may be produced by means of motion actuators, which e.g. may be constituted by pneumatic cylinders or electromagnets, which via turning plates suspended in an outer tube act on the inner wall.

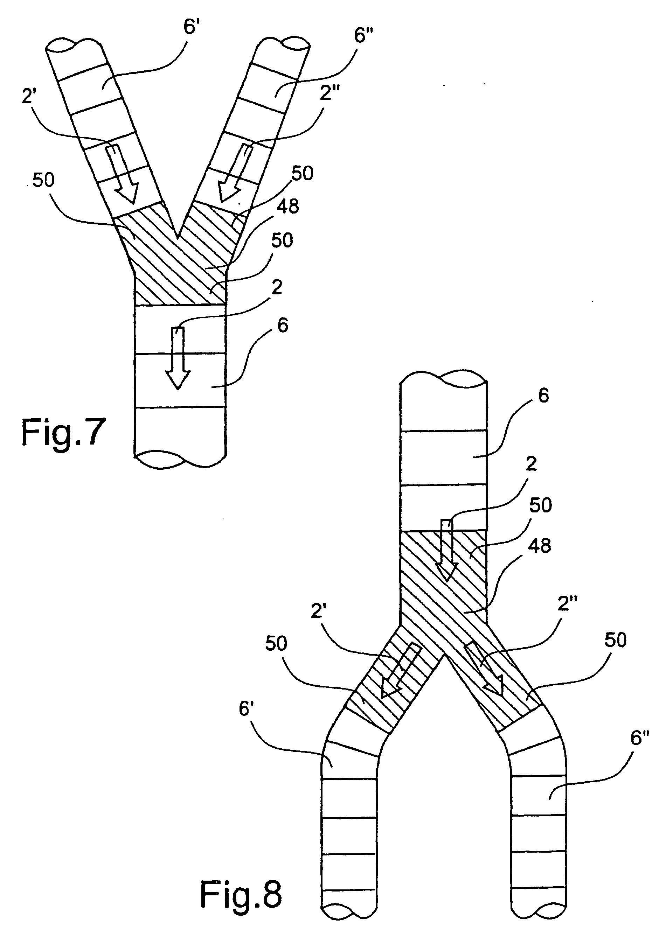

In some cases, it may be advantageous to direct the falling stream of material from a plurality of falling streams 2 conducted in the duct structures 6 according to the invention into a lesser number, or a greater number of material flows, the fall of which are controlled. In Fig. 7 is thus shown an embodiment with a branch 48, where two partial falling streams 2', 2" of material via duct structures 6', 6" at the passage of the branch 48, are brought together in one falling stream 2. In Fig. 8 is shown how a falling stream 2 conducted in a duct structure 6 at the passage of a branch 48 is divided into two partial falling streams 2', 2", which are conducted in duct structures 6', 6". It is to be mentioned that in a duct structure there may very well occur a plurality of distributing arrangements of both kinds. The said distribution may be advantageous in connection with the distribution of the mass flow in a hold where the branching of the material flow implies a considerable saving of work in that better possibility of laying out the flow of material along the side of the hold is provided. The dividing of the flow of material may also be suitable in connection with mixing a part of this with another material flow for forming a mixed product.

For controlling filling and emptying of the bladders 30 via the connection facilities 26 on the outer layer 14 in the right order and with the desired speed, a simple, rotating distributor may be used in principle, but, as it will be understood by the following, EDP control may more suited. The peristaltic movement may be produced by the control system being set to fill e.g. every tenth bladder. Firstly, no. 1, 11, 21 etc. are filled, in the next moment no. 2, 12, 22 etc. are filled, while the first ones are emptied, and so on.

With a duct construction according to the invention it will also be possible to form a funnel without periodical movements as the bladders 30 are only inflated so that they project into the cavity 36 of the duct structure. A funnel may be used for impeding the free fall in a flow of break bulk when the dimensions of the funnel are closely adapted to the properties of the break bulk and amount per time unit and the fall height. Such adapting will be very difficult to achieve with a funnel consisting of rigid sections, which either may give clogging or too little deceleration, whereas a duct with sectionally movable wall according to the invention will be well suited as the clear in the individual sections may be immediately adjusted on the basis of signals from sensors concurrently detecting e.g. the flow speed at different points. At the passage of the break bulk through such a funnel, the friction is, however, hardly reduced to the same level as by the ideal parallel displacement, but on the contrary is assumed to play a role in the deceleration. However, it is to be mentioned that the primary application of the duct structure 6 will be a peristaltically leading down in a controlled manner of the flow of material or break bulk.

The controlling of the movements of the wall section is adapted according the chosen type of motion actuator. On a duct made up of bladders there may thus be provided pressure and suction pumps on each bladder, but usually the simplest arrangement is obtained when a compressed-air pipe from which all bladders are filled through remotely controlled valves is arranged along the duct, while the emptying takes place through corresponding valves, either to the atmosphere or to a suction pipe. Passive emptying, where the valves are only opened to the atmosphere provides the simplest structure, but a faster emptying and thereby a more precise controlling of the movements in the duct is achieved when the discharge valves are connected with a suction pump. With regard to energy, it is most advantageous to use a closed air circuit, as the pressure volume work made by the inflation of each bladder may hereby be recovered by the emptying. At least the suction side of the compressor should communicate with the discharge side of the bladders. Mutual connections between the bladder may also be arranged, possibly through small pumps so that the weight of the material at the emptying of one bladder contributes more directly to the filling of the next. With a closed air circuit, it may suffice with a very small compressor capacity for maintaining the pressure in the system, particularly when suitable buffer containers are inserted. If the total construction is made with piping materials, etc with small losses, there may even be gained energy by the operation, as the loss of potential energy of the material by the passage of the fall height is added to the air circuit.

By the filling of e.g. a ship hold, it is a significant advantage by a duct structure 6 made up of bladders according to the invention that the length may be changed within wide limits, as the duct structure 6 may be pulled out or pushed together as a bellows.

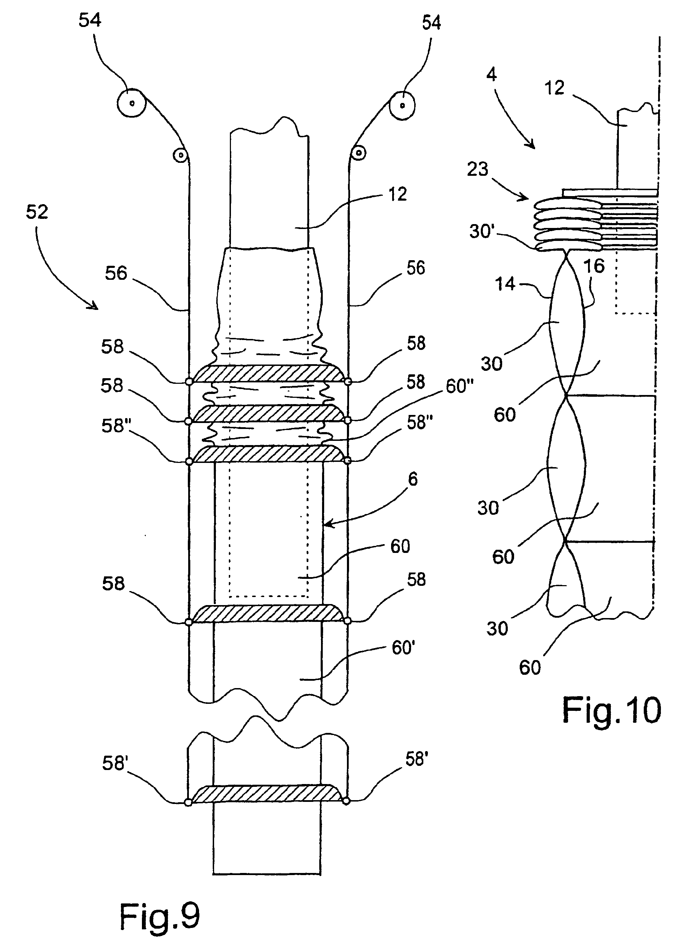

Different embodiments of this bellow-like collapsing are shown in Figs. 9-13. The folding may, if necessary, be aided by foldings, pre-stressing etc., forming part of the construction of the bladders, or by mechanical devices, air nozzles, or the like provided close to the folding area. If the outer wall of the duct is made non-stretchable, it may be necessary to form special corners as known from camera bellows.

In Fig. 9 is thus indicated a device for performing the hoisting, where a number of ropes 56 running in the whole length of the duct structure are passed through eyelets 58 at each segment 60, as a gripping device is provided at each eyelet 58 that may be remotely controlled for catching the rope. If a length of the duct structure 6 is desired to be drawn up, the gripping devices 58 are clamped on the segment 60 immediately under the supply tube 12, and the segment 60 is pulled up around the tube 12. Then the gripping devices 58' on segment 60' are clamped while they are slacked on the now hoisted and collapsed segment 60", and the segment 60' is drawn up. In this way is continued until as many segments have been drawn up that the active part of the duct structure 6 has the desired length. After the hoisting, the ropes 56 have to remain in engagement with the lowermost of the hoisted segments 60" in order to prevent sliding down. It will be obvious that the ropes in the embodiment shown in Fig. 9 are to be secured to the lower end of the shaft, whereas it may be loose in the other gripping eyelets 58, except the gripping eyelets 58" which are holding fast the lowermost of the hoisted segments 60".

Shortening of the duct structure 6 may also be effected by ingenious utilisation of the bladders as indicated in Fig. 10. If the duct structure 6 is desired shortened, all bladders 30 except the uppermost 30' are inflated with full pressure. Hereby, the duct structure is made to constitute a relatively stiff tube which can be used for forcing the uppermost bladder up around the supply tube 12, as only e.g. 3 ropes connected directly with the lowermost end of the duct structure are necessary. By this method, there is to be added a locking device not described in detail which prevents sliding down of the not used segments/bladders 23. When the bladders are intended to be folded as shown in Fig. 10, the locking may be effected by the suction action only by pumping out the uppermost bladders, 23, provided that the duct structure 6 with contents does not weigh more than that corresponding to the atmospheric pressure on the area of the collapsed bladder.

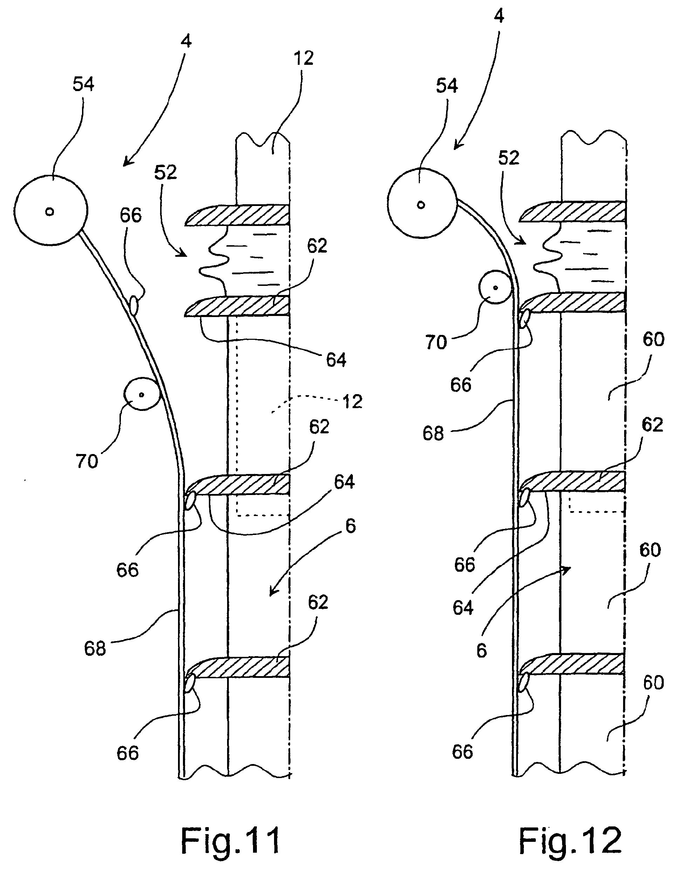

Instead of an arrangement with gripping devices with controllable gripping eyelets on each segment and ropes, there may, as it appears from Figs. 11 and 12, be used a device with strong chains, toothed belts 68 or the like, which run down along the part of the duct structure 6 not hoisted, and the segments of which in the shown embodiment are provided with projecting pins 66 oriented towards the duct structure 6 engaging corresponding gripping areas 64 on elements 62 on the duct structure segments 60 and thereby carry the hanging part of the duct structure 6. By hoisting by an hoisting unit 54, the chains 68 are drawn to the sides over rollers 70 or the like opposite the place where the folding of the not used part 52 of the duct structure 6 starts, whereby they disengage the gripping areas 64 of the elements 62 of the duct structure 6. Hereby, it becomes possible to avoid controllable gripping devices on each segment of the duct structure.

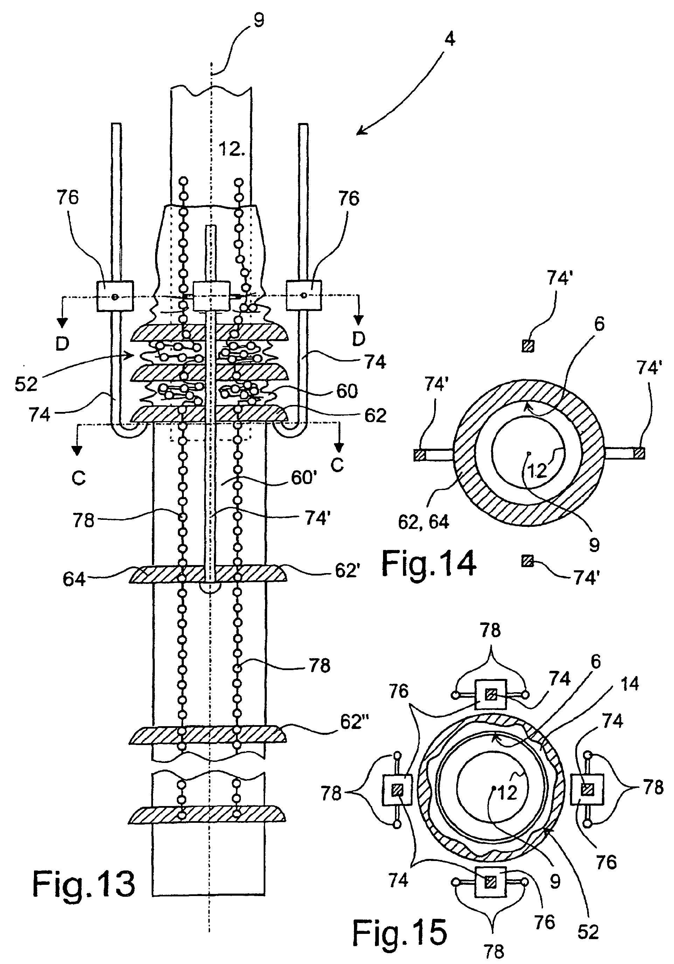

A further embodiment of the duct structure, comprising means for shortening/extending it in a bellow-like way is indicated in Fig. 13. Here is used a strong gripping device which may lift and hold fast the segments of the duct structure as they are pulled up, and hold them in the hoisted position.

Furthermore, there may be used a gripping device which is disposed opposite the folding area 52, and which may be brought in engagement with the passive elements 62 comprising gripping areas 64, e.g. as rings provided around and secured to them opposite the borders between the bladders/sections 60. Such a gripping device may consist of two sets of claws 74, each typically consisting of 2-3 claws, as the sets may be moved independently of each other along, against and away from the duct axis 9. One claw set 74 then holds the segment 60 of the duct structure 6 last hoisted, while the second set 74' gets the next segment 60', after which the roles are interchanged. By this method it is presupposed that the uppermost duct segment 60 can carry the hanging, active part of the duct structure with content of break bulk. This may be achieved by using suitably strong material for the duct, possibly with embedded fibre reinforcement, or by relief chains 78 fastened above in the suspension area 4 of the duct structure and extending down along the duct structure 6 and fastened to this with suitable spacing.

As an example, in Fig. 13 there is shown a hoisting mechanism with two claw sets 74, each consisting of two claws and with relief chains along the duct structure 6. The movement of each claw 74 is shown here to be made with parallel displacement as regards the movement along the centre axis 9 of the duct structure and by turning as regards the movement towards and away from it. The claws 74 lift the ring 62, which is concentric with the duct structure 6, and in which also the relief chains 78 are fastened. On the Figure, the segment 60 last hoisted with ring 62 is held by the claw set 74 while the claw set 74' is ready for pulling up the next segment 60'. When this is desired, the claws in set 74' are moved upwards carrying with them the ring 62', until the ring 62 has been relieved. The ring 62' is now held by the claws 74' in the hoisted position and supports the hitherto hoisted part of the duct structure 6 while the claws 74 may be passed down to the ring 62" and engage this. The out-and-in-movement of the claws 74 may be motor controlled or may just be effected by springs allowing the claws 74 to pass by a ring on the way down, but which after the passage make them fall into engagement with the ring. The vertical displacement of the claw sets 74 may e.g. take place by means of motor driven claw suspensions 76.

However, it is to be noted that the one set of claws 74 may be substituted by activatable and deactivatable, stationarily disposed holding means (not shown) in the suspension area 4, so that the duct structure 6 is hoisted by segments with a single claw-set 74, so that this successively hoists the ring 62 for engaging the stationary holding means under a bellow-like collapsing 52 of the duct structure 6.

It is noted that by the invention it has been realised that combinations of the above described embodiments of means for axial collapsing and extension of the duct structure will be possible, depending on application.

The described operations for shortening the duct structure obviously do not have to be commenced manually one by one, but may be commenced through an operation-friendly EDP control, where the operator only has to require a certain active duct structure length, after which the necessary operations are performed automatically in rapid succession. Such a control may simultaneously provide for the collapsed part of the duct structure to be pushed out of the inflation sequence, and for a peristaltic movement to be, at any time, adjusted to the number of bladders in the active part of the duct structure.

For operating a duct structure of the bladder type according to the invention, only a small air pressure is needed. The pressure requirement is determined according to the density of the material and according to the greatest height of the column of material which is to be supported by an inflated bladder. For grain and the like, a density of about 800 kg/m³ may be assumed, whereas for artificial fertiliser, cement clinkers and the like about 2000 kg/m³ is to be counted on. If the height of the column is set to 1 m, the bladder pressure for the said densities only has to be 0.08 and 0.2 bar, respectively, over the sum of the atmospheric pressure and the pressure required for inflating the unloaded bladder, the latter pressure being determined by the material and shape of the bladder. In practice, by peristaltic operation, a certain pressure surplus has to be used, which inter alia is to be regulated according to the desired speed of the inflation, i.e. according to the required capacity of the duct structure. Also depending hereon is the air requirement, which for a given capacity may be calculated approximately from the bladder size, the periodical inflation pattern and the length of the duct structure. With a closed air circuit, the need for power will largely be limited to what corresponds to compressor loss, pump loss and pipe loss together with hysteresis loss in the bladder material. The cross-sectional area of the duct structure has to be adapted according to the desired through-flow capacity and according to the inaximum allowed speed of the material. It may e.g. be required that the speed corresponds at the most to what is attained by a free fall of 0.5 m, i.e. 3.1 m/s. If now a capacity of 1000 m³ per hour is desired, this speed corresponds to a calculated pipe diameter of 0.34 m, i.e. not an uncomfortable large dimension.

The main advantage of duct structures according to the invention is the enabled careful treatment of the material, but to this comes lightness, flexibility and durability compared with the prior art constructions. Of advantages there may also be mentioned little need of space in the folded state, possibility of recovering the fall energy of the material, and the utilisation of the controllably movable wall for counteracting and relieving clogging.

## Claims

1. A method for leading down in a controlled manner a falling stream (2) of material or break bulk, comprising the application of a substantially vertically oriented tube-like duct structure (6) hanging from at least one suspending region (4) and disposed under a feeding arrangement (12), and comprising at least one wall, the internal cross-section of the duct structure being sectionally brought to narrowing according to periodic time patterns by performing a displacement of the wall towards and away from the falling stream (2) for establishing a sectionally complete or partial closing and opening of the duct cross-section through which the falling stream is running.

2. A duct structure (6) for use in performing, the method according to claim 1, comprising a tubular and substantially vertically oriented structure (6) hanging down from a suspension region (4), the upper end of which is typically placed under and enclosing the discharge mouth (10) of a feeding arrangement (12) for a falling stream (2) of loose material or break bulk, the structure (6) comprising an outer layer (14), **characterised in that** the structure (6) further comprises an inner layer (16) of flexible material for guiding a falling or sliding flow of material (2), where the inner and outer layers are arranged with means for controllable sectional induction of stepwise progressing deformation of the inner layer (16) according to periodic time patterns for forming a complete or partial blocking (20) for the falling or sliding stream of material (2).

3. A duct structure (6) according to claim 2, **characterised in that** the outer and inner layers (14,16) are tightly joined in a row of transverse areas (22) for forming successive, intermediate transverse cells (30), each being in controlled connection, via connection facilities (26), with a pressure medium source (28) for inducing the deformation of the inner layer (16) in the outer layer (14).

4. A duct structure (6) according to claim 2, **characterised in that** the outer and inner layers (14,16) are constituted by a row of closed, mutually joined bladders (30), together forming the tubular duct structure (6), the part (32) of the bladders (30) forming the outer layer (14) of the duct being constituted by a material, which is less stretchable than or which is stable against stretching compared with the part (34) of the annular bladders (30), which together form the flexible inner layer (16), and where the bladders (30) each are in controlled connection, via connection facilities (26), with a pressure medium source (28) in the outer layer (14) for inducing the deformation of the part of the annular bladders (30) together forming the inner layer (16) in the tubular duct structure (6).

5. A duct structure (6) according to claim 2 or 4, **characterised in that** a plurality of the annular bladders (30) together forming the inner layer (16) of the duct structure (6) and distributed over at least a part of the length of the duct structure include inflatable, flap-like sections (38) projecting into the duct cavity (36) and being in controlled connection with a pressure medium source (28) via connection facilities (26) in the outer layer (14) for controllable sectional induction of stepwise, according to periodical time patterns, progressing deformation of the flap-like sections (28) for periodical formation of complete or partial blocking (20) of the falling or sliding flow of material (2).

6. A duct structure according to any of claims 3-5, **characterised in that** at least of one of the annular bladders (30) has a structure, which at the inflating of the bladders (30) counteracts deformation directed against the flow of material of the part (34) of the annular bladder(s) together forming the inner wall (16) of the duct structure, yet allowing a distending of the bladder (30) in the longitudinal direction of the duct.

7. A duct structure according to claim 6, **characterised in that** the annular bladders (30) are each sectionalised, the sections each being in controlled connection with a pressure medium source via connection facilities (26) in the outer layer (14), respectively.

8. A duct structure (6) according to any of claims 2 - 4, **characterised in that** it is constituted by an outer thin-walled tube (40) drawn on an inner thin-walled tube (42), the diameters of the tubes being approximately the same, where the outer tube (40) and the inner tube (42) are constituted by flexible materials, and where the tubes (40,42) are interconnected by annular joints (44) dividing the space between two tube walls (40, 42) into bladders (30), the bladders (30) each being in controlled connection with a pressure medium source (28) via connection facilities (26) for controllable sectional induction of stepwise, according to periodical time patterns, progressing deformation of the inner tube wall (42) for formation of complete or partial blocking of the falling or sliding flow of material (2).

9. A duct structure (6) according to any of claims 2 - 8, **characterised in that** the tubular duct structure (6) may include at least one branch (48) with inlets and outlets (50) to which are joined duct structures (6', 6"), the construction of which typically corresponding to the tubular duct structure (6), and which branch (48) is adapted in such a way that the falling stream (2) supplied via the duct structure is divided into a number of substreams (2', 2") at the passage of a branch (48).

10. A duct structure (6) according to any of claims 2 - 9, **characterised in that** a plurality of tubular duct structures (6', 6") are connected to at least one branch (48) with inlets (50), to which are joined duct structures (6', 6"), the construction of which typically corresponding to the tubular duct structure (6) so that the falling streams (2',2") supplied via the duct structures (6', 6") are joined in a lesser number of duct structures (6) at the passage of a branch (48).

11. A duct structure (6) according to any of claims 2 - 10, **characterised in that** both the inner layer (16) and the outer layer (14) are foldable for enabling longitudinal adaptation of the duct structure (6) by bellow-like axial collapsing/extension (52) over a part or the entire length thereof.

12. A duct structure (6) according to claim 11, **characterised in that** it comprises means for performing a bellow-like partial or complete axial collapsing/extension over its longitudinal dimension, preferably in the feeding area (12), as the suspension area (4) and the outer walls (14) of the duct structure comprise mutually interacting means for arresting and sectional collapsing, respectively, of the duct structure (6).

13. A duct structure (6) according to claim 12, **characterised in that** the mutually interacting means for arresting and sectionally collapsing the duct structure (6) are constituted by a number of coiling ropes (56), which hang down from a suspension arrangement (8) including a hoisting device (54) and extend over the whole length of the duct structure through activatable gripping eyelets (58), which project from the outer wall (14) of the duct structure, the gripping eyelets (58) being selectively activatable for gripping on the ropes (56), and which ropes (56) are at least fastened at the free end of the duct structure (6), and so that a segmented collapsing of the duct structure (6) is performed by activating the gripping eyelet (58) on a segment (60) of the duct structure (6) situated under the feeding arrangement (12), succeeded by a hoisting of the rope (56) by the hoisting device (54) to a desired level.

14. A duct structure (6) according to claim 12, **characterised in that** the mutually interacting means for arresting and collapsing the duct structure (6) are constituted by elements (62) projecting from the outer wall (14) of the duct, comprising gripping areas (64) interacting with gripping devices (66) oriented toward the gripping areas and placed on a number of chain or belt structures (68) hanging down from the hoisting device (54) and preferably evenly distributed around the periphery of the duct structure, the gripping devices (66) being displacable by guide means (70) towards and away from the duct structure (6) so that the duct structure (6) is collapsed at the hoisting of the gripping devices (66) by the hoisting device (54) so that the gripping devices (66) in a collapsed element (52) of the duct structure (6) are led free of engagement with the gripping areas (64) by the guide means (70), and are guided for engagement by performing an axial change of length of the duct structure (6).

15. A duct structure (6) according to claim 12, **characterised in that** the mutually interacting means for arresting and collapsing the duct structure (6) are constituted by members (62) projectin from the outer wall (14) of the duct and having gripping areas (64) that interact with selectively activatable and deactivatable holding means in the suspension area (4), and with at least one selectively activatable and deactivatable set of claw-shaped gripping/holding means (74) which are suspended in the suspension area (4) displacable in parallel in relation to the axial extension of the duct structure, where the holding means are used for holding the duct structure (6), and in such a way that collapsing of the duct structure (6) is performed by the set of claws (74) being displaced for engagement with the gripping area (64) of the projecting element (62) on the segment (60) located immediately under the feeding area (12), after which the set of claws (74) is hoisted under collapsing of the duct structure (6) until the gripping area (64) has been brought to engagement in the selectively activatable and deactivatable holder means in the suspension area (4), after which the set of claws (74) is released from the gripping area (64) and displaced downwards in parallel for engaging the gripping area on the succeeding element in the duct structure (6).

16. A duct structure (6) according to claim 12, **characterised in that** the mutually interacting means for arresting and sectional collapsing of the duct structure (6) are constituted by members (62) projecting from the outer wall (14) of the duct with gripping areas (64) interacting with a plurality of selectively activatable and deactivatable set of claw-shaped gripping/holding devices (74) which in the suspension area (4) are suspended displacable in parallel relative to the longitudinal direction of the duct structure, where at least one set of claws (74) is used for securing the duct structure (6), and so that collapsing of the duct structure (6) is performed by a second set of claws (74') being displaced for engaging the gripping area (64) of the projecting member (62) on the segment (60') situated immediately under the feeding area (12), after which the set of claws (74') is hoisted under collapsing of the duct structure (6), after which the set of claws (74) situated above is displaced in parallel downward for engaging the gripping area on the succeeding element on the duct structure (6).

17. A duct structure (6) according to any of claims 2 - 16, **characterised in that** that induction of stepwise progressive deformation of the inner layer (16) according to periodic time patterns for formation of a complete or partial blocking (20) of the falling or sliding flow of material (2) is controlled via a control unit programmed in such a way that an operator determined operative length of the duct structure (6) is obtained by collapsing/extension of the duct structure (6) by the interacting means (54, 56, 74, 58, 62) herefore in the suspension area (4) and on the duct structure, and furthermore so that the deformations of the inner layer (16) in the collapsed parts (52) of the duct structure (6) are stopped.

18. A duct structure (6) according to any of claims 2 - 17, **characterised in that** it comprises means for recovering the pressure volume work performed by inflating the bladders (30).

19. A duct structure according to any of claims 2 - 18, **characterised in that** it comprises means for recovering the pressure volume work made by the falling stream (2) on the bladders (30) and their air content.

## Patentansprüche

1. Verfahren zum gesteuerten Herableiten eines fallenden Material- (2) oder Schüttgutstroms, wobei das Verfahren das Verwenden eines im Wesentlichen vertikal ausgerichteten rohrartigen Leitungskanalaufbaus (6) aufweist, der von mindestens einem Aufhängebereich (4) herabhängt und unter einer Zuführungsanordnung (12) angeordnet ist, und welcher mindestens eine Wand aufweist, wobei der innere Querschnitt des Leitungskanalaufbaus abschnittsweise gemäß periodischen Zeitmustern verengt wird, indem eine Verstellung der Wand auf den Fallstrom (2) zu und von diesem weg ausgeführt wird, um ein abschnittsweises vollständiges oder teilweises Schließen und Öffnen des Leitungsquerschnitts herzustellen, durch welchen der fallende Strom hindurchläuft.

2. Leitungskanalaufbau (6) bei der Verwendung zur Durchführung des Verfahrens nach Anspruch 1, welcher einen rohrartigen und im Wesentlichen vertikal ausgerichteten Aufbau (6) aufweist, der von einem Aufhängebereich (4) herabhängt, wobei sein oberes Ende typischerweise unter der Abgabeöffnung (10) einer Zuführungsanordnung (12) für einen fallenden Strom (2) von losem Material oder Schüttgut angeordnet ist und diese Abgabeöffnung (10) umschließt, wobei der Aufbau (6) eine äußere Schicht (14) aufweist, **dadurch gekennzeichnet, dass** der Aufbau (6) weiterhin eine innere Schicht (16) aus flexiblem Werkstoff zur Führung eines fallenden oder gleitenden Materialstroms (2) aufweist, worin die innere und äußere Schicht mit Einrichtungen zur gesteuerten abschnittsweisen Auslösung bzw. Erzeugung von stufenweise fortschreitender Verformung der inneren Schicht (16) gemäß periodischen Zeitmustern zur Bildung einer vollständigen oder teilweisen Blockierung (20) für den fallenden oder gleitenden Materialstrom (2) angeordnet ist.

3. Leitungskanalaufbau (6) nach Anspruch 2, **dadurch gekennzeichnet, dass** die äußere und innere Schicht (14, 16) in einer Reihe von Querbereichen (22) dicht bzw. undurchlässig zur Bildung von aufeinanderfolgenden Zwischenquerzellen (30) verbunden ist, wobei jede mit einer Druckmittelquelle (28) zur Erzeugung der Verformung der inneren Schicht (16) in der äußeren Schicht (14) über Verbindungseinrichtungen (26) in gesteuerter Verbindung steht.

4. Leitungskanalaufbau (6) nach Anspruch 2, **dadurch gekennzeichnet, dass** die äußere und innere Schicht (14, 16) eine Reihe von geschlossenen, gegenseitig verbundenen Blasen (30) aufweist, welche zusammen den rohrartigen Leitungskanalaufbau (6) bilden, wobei der Abschnitt (32) der Blasen (30), der die äußere Schicht (14) des Leitungskanals bildet, aus einem Werkstoff besteht, der eine geringere Dehnung aufweist als die Abschnitte (34) der ringförmigen Blasen (30) oder der widerstandsfähig gegen Dehnung in Vergleich zu den Abschnitten (34) ist, welche zusammen die flexible innere Schicht (16) bilden, und wobei jede der Blasen (30) über Verbindungseinrichtungen (26) in gesteuerter Verbindung mit einer Druckmittelquelle (28) in der äußeren Schicht (14) zur Erzeugung der Verformung des Abschnitts der ringförmigen Blasen (30) steht, welche zusammen die innere Schicht (16) in der rohrartigen Leitungsstruktur (6) bilden.

5. Leitungskanalaufbau (6) nach Anspruch 2 oder 4, **dadurch gekennzeichnet, dass** eine Vielzahl der ringförmigen Blasen (30), welche zusammen die innere Schicht (16) des Leitungskanalaufbaus (6) bildet und über mindestens einen Abschnitt der Länge des Leitungskanalaufbaus aufgeteilt ist, aufblasbare klappenartige Abschnitte (38) aufweist, die in den Leitungshohlraum (36) hervorstehen und über Verbindungseinrichtungen (26) in der äußeren Schicht (14) in gesteuerter Verbindung mit einer Druckmittelquelle (28) zur gesteuerten abschnittsweisen Auslösung bzw. Erzeugung von stufenweise fortschreitender Verformung der klappenartigen Abschnitte (38) gemäß periodischen Zeitmustern zur Bildung von vollständiger oder teilweiser Blockierung (20) für den fallenden oder gleitenden Materialstrom (2) stehen.

6. Leitungskanalaufbau nach einem der Ansprüche 3 bis 5, **dadurch gekennzeichnet, dass** mindestens eine der ringförmigen Blasen (30) einen Aufbau aufweist, welcher beim Aufblasen der Blasen (30) einer gegen den Materialstrom gerichteten Verformung des Abschnitts (34) der ringförmigen Blase(n) (30) entgegenwirkt, die zusammen die innere Wand (16) des Leitungskanalaufbaus bilden, wobei jedoch eine Ausdehnung der Blase (30) in der Längsrichtung des Leitungskanals ermöglicht ist.

7. Leitungskanalaufbau nach Anspruch 6, **dadurch gekennzeichnet, dass** jede der ringförmigen Blasen (30) in Abschnitte aufgeteilt ist, wobei jeder Abschnitt jeweils mit einer Druckmittelquelle über Verbindungseinrichtungen (26) in der äußeren Schicht (14) in gesteuerter Verbindung steht.

8. Leitungskanalaufbau (6) nach einem der Ansprüche 2 bis 4, **dadurch gekennzeichnet, dass** er ein äußeres dünnwandiges Rohr (40) aufweist, welches über ein inneres dünnwandiges Rohr (42) gezogen ist, wobei die Durchmesser der Rohre annähernd gleich sind, wobei das äußere Rohr (40) und das innere Rohr (42) aus flexiblen Werkstoffen bestehen, und wobei die Rohre (40, 42) untereinander mit ringförmigen Verbindungen (44) verbunden sind, welche den Raum zwischen zwei Rohrwänden (40, 42) in Blasen (30) teilen, wobei jede der Blasen (30) über Verbindungseinrichtungen (26) in gesteuerter Verbindung mit einer Druckmittelquelle (28) zur gesteuerten abschnittsweisen Auslösung bzw. Erzeugung gemäß periodischen Zeitmustern von stufenweise fortschreitender Verformung der inneren Rohrwand (42) zur Bildung von vollständiger oder teilweiser Blockierung des fallenden oder gleitenden Materialstrom (2) steht.

9. Leitungskanalaufbau (6) nach einem der Ansprüche 2 bis 8, **dadurch gekennzeichnet, dass** der rohrartige Leitungskanalaufbau (6) mindestens eine Verzweigung (48) mit Einlässen und Auslässen (50) aufweisen kann, mit denen Leitungskanalaufbauten (6', 6") verbunden sind, deren Gestaltung typischerweise zu dem rohrartigen Leitungskanalaufbau (6) korrespondiert, und wobei die Verzweigung (48) zur Aufteilung des durch den Leitungskanalaufbau zugeführten fallenden Stroms (2) beim Durchlauf einer Verzweigung (48) in eine Anzahl von Unterströmen (2', 2") ausgebildet ist.

10. Leitungskanalaufbau (6) nach einem der Ansprüche 2 bis 9, **dadurch gekennzeichnet, dass** eine Vielzahl von rohrartigen Leitungskanalaufbauten (6', 6") mit mindestens einer Verzweigung (48) mit Einlässen (50) verbunden ist, mit denen Leitungskanalaufbauten (6',6'') verbunden sind, deren Konstruktion typischerweise zu dem rohrartigen Leitungskanalaufbau (6) so korrespondiert, dass die über die Leitungskanalaufbauten (6',6'') zugeführten fallenden Ströme (2',2'') in eine niedrigere Zahl von Leitungskanalaufbauten (6) beim Durchlauf einer Verzweigung (48) zusammengeführt sind.

11. Leitungskanalaufbau (6) nach einem der Ansprüche 2 bis 10, **dadurch gekennzeichnet, dass** beide, nämlich die innere Schicht (16) und die äußere Schicht (14), zur Ermöglichung von längsgerichteter Anpassung des Leitungskanalaufbaus (6) durch balgartige axiale Faltung/Ausdehnung (52) über einem Abschnitt oder der gesamten Länge davon faltbar ausgebildet sind.

12. Leitungskanalaufbau (6) nach Anspruch 11, **dadurch gekennzeichnet, dass** er Einrichtungen zur Ausführung einer teilweisen oder vollständigen balgartigen Faltung/Ausdehnung über seine Längsabmessung aufweist, vorzugsweise im Zuführbereich (12), wenn der Aufhängungsbereich (4) und die äußeren Wände (14) des Leitungskanalaufbaus gegenseitig zusammenwirkende Einrichtungen jeweils zur Arretierung und abschnittsweisen Zusammenfaltung des Leitungskanalaufbaus (6) aufweisen.

13. Leitungskanalaufbau (6) nach Anspruch 12, **dadurch gekennzeichnet, dass** die gegenseitig zusammenwirkenden Einrichtungen zur Arretierung und abschnittsweisen Zusammenfaltung des Leitungskanalaufbaus (6) eine Anzahl von Aufwickelseilen (56) aufweisen, welche von einer Aufhängungsanordnung (8) mit einer Winden- bzw. Hebezeugvorrichtung (54) herabhängen und sich über die gesamte Länge des Leitungskanalaufbaus durch aktivierbare Klemmösen (58) hindurch erstreckt, die von der äußeren Wand (14) des Leitungskanalaufbaus hervorstehen, wobei die Klemmösen (58) selektiv zur Festklemmung auf den Seilen (56) aktivierbar sind, und die Seile (56) zumindest an dem freien Ende des Leitungskanalaufbaus (6) befestigt sind, so dass eine segmentierte Zusammenfaltung des Leitungskanalaufbaus (6) durch Aktivierung der Klemmösen (58) an einem Segment (60) des unter der Zuführungsanordnung (12) angeordneten Leitungskanalaufbaus (6) ausführbar ist, gefolgt von einem Hochziehen des Seils (56) durch die Windenvorrichtung (54) auf eine gewünschte Höhe.

14. Leitungskanalaufbau (6) nach Anspruch 12, **dadurch gekennzeichnet, dass** die gegenseitig zusammenwirkenden Einrichtungen zur Arretierung und abschnittsweisen Zusammenfaltung des Leitungskanalaufbaus (6) Bauteile (62) aufweisen, welche von der äußeren Wand (14) der Leitung hervorstehen und Greifbereiche (64) aufweisen, die mit Greifvorrichtungen (66) zusammenwirken, welche auf die Greifbereiche (64) gerichtet, an einer Anzahl von von der Windenvorrichtung (54) herabhängenden Ketten- oder Riemenaufbauten (68) angeordnet und vorzugsweise gleichmäßig auf dem Umfang des Leitungskanalaufbaus verteilt sind, wobei die Greifvorrichtungen (66) durch Führungseinrichtungen (70) auf den Leitungskanalaufbau (6) hin und von ihm weg dergestalt verstellbar sind, dass der Leitungskanalaufbau (6) beim Hochziehen der Greifvorrichtungen (66) durch die Windenvorrichtung (54) zusammenfaltbar ist, so dass die Greifvorrichtungen (66) in einem zusammengefalteten Element (52) des Leitungskanalaufbaus (6) durch die Führungseinrichtungen (70) aus dem Eingriff mit den Greifbereichen (64) gelöst, und zum Eingriff durch Ausführung einer axialen Längenänderung des Leitungskanalaufbaus (6) geführt sind.

15. Leitungskanalaufbau (6) nach Anspruch 12, **dadurch gekennzeichnet, dass** die gegenseitig zusammenwirkenden Einrichtungen zur Arretierung und abschnittsweisen ZusammenfaItung des Leitungskanalaufbaus (6) Bauteile (62) aufweisen, welche von der äußeren Wand (14) der Leitung hervorstehen und Greifbereiche (64) aufweisen, die mit selektiv aktivierbaren und deaktivierbaren Halteeinrichtungen in dem Aufhängungsbereich (4) zusammenwirken, sowie mit mindestens einer selektiv aktivierbaren und deaktivierbaren Gruppe von klauen- bzw. hakenartigen Greif-/Halteeinrichtungen (74), die in dem Aufhängungsbereich (4) parallel verstellbar in Bezug auf die axiale Ausdehnung des Leitungskanalaufbaus aufgehängt sind, wobei die Halteeinrichtungen zum Halten des Leitungskanalaufbaus (6) in einer solchen Weise vewendet sind, dass eine Zusammenfaltung des Leitungskanalaufbaus (6) durch die Gruppe von Klauen (74) ausführbar ist, welche zum Eingriff mit dem Greifbereich (64) des hervorstehenden Bauteils (62) an dem direkt unter dem Zuführbereich (12) angeordneten Segment (60) verstellbar sind, wonach die Gruppe von Klauen (74) mit Zusammenfaltung des Leitungsaufbaus (6) hochziehbar ist, bis dass der Greifbereich (64) in der selektiv aktivierbaren und deaktivierbaren Halteeinrichtung in dem Aufhängungsbereich (4) in Eingriff gebracht worden ist, wonach die Gruppe von Klauen (74) von dem Greifbereich (64) lösbar und parallel nach unten zum Eingriff mit dem Greifbereich des nachfolgenden Elements in dem Leitungskanalaufbau (6) verstellbar ist.

16. Leitungskanalaufbau (6) nach Anspruch 12, **dadurch gekennzeichnet, dass** die gegenseitig zusammenwirkenden Einrichtungen zur Arretierung und abschnittsweisen Zusammenfaltung des Leitungskanalaufbaus (6) Bauteile (62) aufweisen, welche von der äußeren Wand (14) der Leitung hervorstehen und Greifbereiche (64) aufweisen, die mit einer Vielzahl von selektiv aktivierbaren und deaktivierbaren Gruppe von klauen- bzw. hakenartigen Greif-/Halteeinrichtungen (74), die in dem Aufhängungsbereich (4) parallel verstellbar in Bezug auf die Längsrichtung des Leitungskanalaufbaus aufgehängt sind, wobei mindestens eine Gruppe von Klauen (74) zur Sicherung des Leitungsaufbaus (6) verwendet ist, so dass eine Zusammenfaltung des Leitungskanalaufbaus (6) durch eine zweite Gruppe von Klauen (74') ausführbar ist, welche zum Eingriff mit dem Greifbereich (64) des hervorstehenden Bauteils (62) an dem direkt unter dem Zuführbereich (12) angeordneten Segment (60') verstellbar sind, wonach die Gruppe von Klauen (74') mit Zusammenfaltung des Leitungsaufbaus (6) hochziehbar ist, wonach die darüber angeordnete Gruppe von Klauen (74) parallel nach unten zum Eingriff mit dem Greifbereich des nachfolgenden Elements in dem Leitungskanalaufbau (6) verstellbar ist.

17. Leitungskanalaufbau (6) nach einem der Ansprüche 2 bis 16, **dadurch gekennzeichnet, dass** die Auslösung bzw. Erzeugung von stufenweise fortschreitender Verformung der inneren Schicht (16) gemäß periodischen Zeitmustern zur Bildung einer vollständigen oder teilweisen Blockierung (20) für den fallenden oder gleitenden Materialstrom (2) von einer Steuereinheit gesteuert ist, welche in einer solchen Weise programmiert ist, dass eine vom Bediener festgelegte Betriebslänge des Leitungskanalaufbaus (6) durch Zusammenfaltung/Ausdehnung des Leitungskanalaufbaus (6) hierzu durch die zusammenwirkenden Vorrichtungen (54, 56, 74, 58, 62) im Aufhängungsbereich (4) und an dem Leitungsaufbau erlangbar ist, und weiterhin so, dass die Verformungen der inneren Schicht (16) in den zusammengefalteten Abschnitten (52) des Leitungskanalaufbaus (6) anhaltbar sind.

18. Leitungskanalaufbau (6) nach einem der Ansprüche 2 bis 17, **dadurch gekennzeichnet, dass** er Einrichtungen zur Rückgewinnung des beim Aufblasen der Blasen (30) ausgeführten Druckarbeitsaufwands aufweist.

19. Leitungskanalaufbau (6) nach einem der Ansprüche 2 bis 18, **dadurch gekennzeichnet, dass** er Einrichtungen zur Rückgewinnung des Druckarbeitsaufwands aufweist, der durch den fallenden Strom (2) auf die Blasen (30) und deren Luftinhalt ausgeübt ist.

## Revendications

1. Procédé pour faire descendre de manière régulée un flot tombant par gravité (2) de matériel ou de marchandises diverses comprenant l'application d'une structure formant conduit en forme de tube orientée sensiblement verticalement (6) suspendue à au moins une région de suspension (4) et disposée sous un dispositif d'alimentation (12), et comprenant au moins une paroi, la section transversale intérieure de la structure formant conduit se rétrécissant par sections en fonction de programmes périodiques en réalisant un déplacement de la paroi pour la rapprocher et l'éloigner du flot tombant par gravité (2) pour établir une ouverture et une fermeture complètes ou partielles de la section transversale du conduit à travers laquelle s'écoule le flot tombant par gravité.

2. Structure formant conduit (6) destinée à être utilisée pour réaliser le procédé selon la revendication 1, comprenant une structure tubulaire et orientée sensiblement verticalement (6) suspendue à une région de suspension (4) dont l'extrémité supérieure est, de manière typique, placée sous - et entoure - l'orifice de décharge (10) d'un dispositif d'alimentation (12) pour un flot tombant par gravité (2) de matériel en vrac ou de marchandises diverses, la structure (6) comprenant une couche extérieure (14), **caractérisée en ce que** la structure (6) comprend, en outre, une couche intérieure (16) faite d'une matière souple pour le guidage d'un flot tombant ou glissant par gravité (2) de matériel, où la couche intérieure et la couche extérieure sont pourvues de moyens pour l'induction réglable par sections de la déformation progressive par étapes de la couche intérieure (16) en fonction de programmes périodiques pour la formation d'un blocage complet ou partiel (20) pour le flot tombant ou glissant par gravité (2) de matériel.

3. Structure formant conduit (6) selon la revendication 2, **caractérisée en ce que** la couche intérieure et la couche extérieure (14, 16) sont assemblées de manière compacte dans une rangée de zones transversales (22) pour la formation de cellules transversales intermédiaires successives (30), chacune étant raccordée de manière régulée, via des installations de raccordement (26), à une source de fluide sous pression (28) pour induire la déformation de la couche intérieure (16) dans la couche extérieure (14).

4. Structure formant conduit (6) selon la revendication 2, **caractérisée en ce que** la couche intérieure et la couche extérieure (14, 16) sont constituées d'une rangée de vessies fermées, mutuellement assemblées (30), formant ensemble la structure tubulaire formant conduit (6), la partie (32) des vessies (30) formant la couche extérieure (14) du conduit étant constituée d'une matière qui est moins étirable que - ou qui est stable à l'étirement comparée avec - la partie (34) des vessies annulaires (30), qui forment ensemble la couche intérieure souple (16), et dans laquelle chacune des vessies (30) est raccordée de manière régulée, via des installations de raccordement (26), à une source de fluide sous pression (28) dans la couche extérieure (14) pour induire la déformation de la partie des vessies annulaires (30) formant ensemble la couche intérieure (16) dans la structure tubulaire formant conduit (6).

5. Structure formant conduit (6) selon la revendication 2 ou 4, **caractérisée en ce qu'**une pluralité des vessies annulaires (30) formant ensemble la couche intérieure (16) de la structure tubulaire formant conduit (6) et réparties sur au moins une partie de la longueur de la structure formant conduit comprennent des sections gonflables semblables à des clapets (38) débordant dans la cavité du conduit (36) et raccordées de manière régulée à une source de fluide sous pression (28) via des installations de raccordement (26) dans la couche extérieure (14) pour l'induction réglable par sections de la déformation progressive par étape des sections gonflables semblables à des clapets (28), en foriction de programmes périodiques, pour la formation périodique d'un blocage complet ou partiel (20) du flot tombant ou glissant par gravité (2) de matériel.

6. Structure formant conduit selon l'une quelconque des revendications 3 à 5, **caractérisée en ce qu'**au moins l'une des vessies annulaires (30) a une structure qui, lors du gonflage des vessies (30), contrecarre la déformation dirigée contre le flot de matériel de la partie (34) de la(des) vessie(s) formant ensemble la couche intérieure (16) de la structure formant conduit (6), tout en permettant cependant une distension de la vessie (30) dans la direction longitudinale du conduit.

7. Structure formant conduit selon la revendication 6, **caractérisée en ce que** chacune des vessies annulaires (30) est sectionnée, chacune des sections étant raccordée de manière régulée à une source de fluide sous pression via des installations de raccordement (26) dans la couche extérieure (14), respectivement.

8. Structure formant conduit (6) selon l'une quelconque des revendications 2 à 4, **caractérisée en ce qu'**elle est constituée d'un tube extérieur à paroi mince (40) embouti sur un tube intérieur à paroi mince (42), les diamètres des tubes étant à peu près les mêmes, le tube extérieur (40) et le tube intérieur (42) étant constitués de matières souples et les tubes (40, 42) étant interconnectés par des joints annulaires (44) divisant l'espace entre deux parois de tubes (40, 42) en vessies (30), chacune des vessies (30) étant raccordée de manière régulée, via des installations de raccordement (26), à une source de fluide sous pression (28) pour l'induction réglable par sections, en fonction de programmes périodiques, de la déformation progressive par étape de la paroi du tube intérieur (42) pour la formation d'un blocage complet ou partiel du flot tombant ou glissant par gravité (2) de matériel,

9. Structure formant conduit (6) selon l'une quelconque des revendications 2 à 8, **caractérisée en ce que** la structure tubulaire formant conduit (6) peut comprendre au moins un branchement (48) avec des orifices d'entrée et des orifices de sortie (50) auxquels sont assemblées des structures formant conduits (6', 6") dont la construction correspond, de manière typique, à la structure tubulaire formant conduit (6), et lequel branchement (48) est adapté de telle manière que le flot tombant par gravité (2) alimenté par la structure formant conduit (6) est divisé en un certain nombre de flots secondaires (2', 2") au passage d'un branchement (48).

10. Structure formant conduit (6) selon l'une quelconque des revendications 2 à 9, **caractérisée en ce qu'**une pluralité de structures formant conduits (6', 6") est raccordée à au moins un branchement (48) avec des orifices d'entrée (50) auxquels sont assemblées des structures formant conduits (6', 6") dont la construction correspond, de manière typique, à la structure tubulaire formant conduit (6), de sorte que les flots tombant par gravité (2', 2") alimentés par les structures formant conduits (6', 6") sont assemblés en un moins grand nombre de structures formant conduits (6) au passage d'un branchement (48).

11. Structure formant conduit (6) selon l'une quelconque des revendications 2 à 10, **caractérisée en ce que** la couche intérieure (16) et la couche extérieure (14) sont toutes les deux pliables pour permettre l'adaptation longitudinale de la structure formant conduit (6) par le repliement/la dilatation axial (52) en forme de soufflet sur une partie ou sur toute la longueur de celle-ci.

12. Structure formant conduit (6) selon la revendication 11, **caractérisée en ce qu'**elle comprend des moyens pour réaliser un repliement/une dilatation axial partiel ou complet en forme de soufflet sur sa dimension longitudinale, de préférence dans la zone d'alimentation (12), étant donné que la zone de suspension (4) et les parois extérieures (14) de la structure formant conduit comprennent des moyens mutuellement interactifs pour le blocage et le repliement par sections, respectivement, de la structure formant conduit (6).

13. Structure formant conduit (6) selon la revendication 12, **caractérisée en ce que** les moyens mutuellement interactifs pour le blocage et le repliement par sections de la structure formant conduit (6) sont constitués d'un certain nombre de cordes d'enroulement (56) qui sont suspendues à un dispositif de suspension (8) comprenant un mécanisme élévateur (54) et s'étendent sur toute la longueur de la structure formant conduit au moyen d'oeillets d'accrochage actionnables (58) qui débordent de la paroi extérieure (14) de la structure formant conduit, les oeillets d'accrochage (58) étant actionnables sélectivement pour accrocher les cordes (56), et lesquelles cordes (56) sont au moins fixées à l'extrémité libre de la structure formant conduit, et de sorte qu'un repliement par segments de la structure formant conduit (6) est réalisé en actionnant l'oeillet d'accrochage (58) sur un segment (60) de la structure formant conduit (6) situé sous le dispositif d'alimentation (12), suivi par un levage des cordes (56) à l'aide du mécanisme élévateur (54) jusqu'à un niveau souhaité.

14. Structure formant conduit (6) selon la revendication 12, **caractérisée en ce que** les moyens mutuellement interactifs pour le blocage et le repliement par sections de la structure formant conduit (6) sont constitués d'éléments (62) débordant de la paroi extérieure (14) du conduit comprenant des zones d'accrochage (64) en interaction avec des dispositifs d'accrochage (66) orientés vers les zones d'accrochage et placés sur un certain nombre de structures formant chaînes ou courroies (68) suspendues au mécanisme élévateur (54) et, de préférence, répartis uniformément sur la périphérie de la structure formant conduit, les dispositifs d'accrochage (66) étant déplacés à l'aide de moyens de guidage (70) pour s'approcher et s'éloigner de la structure formant conduit (6) de sorte que la structure formant conduit (6) est repliées lors du levage des dispositifs d'accrochage (66) à l'aide du mécanisme élévateur (54), de sorte que les dispositifs d'accrochage (66) dans un élément replié (52) de la structure formant conduit (6) sont dégagés des zones d'accrochage (64) par les moyens de guidage (70) et sont guidés pour s'engager en réalisant une modification axiale de la longueur de la structure formant conduit (6).

15. Structure formant conduit (6) selon la revendication 12, **caractérisée en ce que** les moyens mutuellement interactifs pour le blocage et le repliement de la structure formant conduit (6) sont constitués d'éléments (62) débordant de la paroi extérieure (14) du conduit et comprenant des zones d'accrochage (64) en interaction avec des moyens de retenue sélectivement actionnables et désactionnables dans la zone de suspension (4), et avec au moins un ensemble sélectivement actionnable et désactionnable de moyens d'accrochage/de retenue en forme de mâchoire (74) qui sont suspendus dans la zone de suspension (4) déplaçables parallèlement à la dilatation axiale de la structure formant conduit, où les moyens de retenue sont utilisés pour retenir la structure formant conduit (6), et de telle manière que le repliement de la structure formant conduit (6) est réalisé par le déplacement de l'ensemble de mâchoires (74) pour qu'il s'engage dans la zone d'accrochage (64) de l'élément débordant (62) sur le segment (60) placé directement sous la zone d'alimentation (12), après quoi l'ensemble de mâchoires (74) est soulevé pendant que la structure formant conduit (6) se replie jusqu'à ce que la zone d'accrochage (64) soit amenée en prise avec les moyens de retenue sélectivement actionnables et désactionnables dans la zone de suspension (4), après quoi l'ensemble de mâchoires (74) est relâché par la zone d'accrochage (64) et déplacé parallèlement vers le bas pour mettre en prise la zone d'accrochage avec l'élément suivant dans la structure formant conduit (6).

16. Structure formant conduit (6) selon la revendication 12, **caractérisée en ce que** les moyens mutuellement interactifs pour le blocage et le repliement de la structure formant conduit (6) sont constitués d'éléments (62) débordant de la paroi extérieure (14) du conduit et comprenant des zones d'accrochage (64) en interaction avec une pluralité de moyens d'accrochage/de retenue en forme de mâchoire sélectivement actionnable et désactionnable (74) qui, dans la zone de suspension (4), sont suspendus et déplaçables parallèlement à la direction longitudinale de la structure formant conduit, où au moins un ensemble de mâchoires (74) est utilisé pour fixer la structure formant conduit (6), et de telle manière que le repliement de la structure formant conduit (6) est réalisé par le déplacement d'un deuxième ensemble de mâchoires (74') pour qu'il s'engage dans la zone d'accrochage (64) de l'élément débordant (62) sur le segment (60') placé directement sous la zone d'alimentation (12), après quoi l'ensemble de mâchoires (74') est soulevé pendant que la structure formant conduit (6) se replie, après quoi l'ensemble de mâchoires (74) placé au-dessus est déplacé parallèlement vers le bas pour mettre en prise la zone d'accrochage avec l'élément suivant dans la structure formant conduit (6).

17. Structure formant conduit (6) selon l'une quelconque des revendications 2 à 1 6, **caractérisée en ce que** l'induction de la déformation progressive par étapes de la couche intérieure (16) en fonction de programmes périodiques pour la formation d'un blocage complet ou partiel (20) du flot tombant ou glissant par gravité (2) de matériel est régulée via une unité de régulation programmée de telle manière que l'on obtient une longueur de fonctionnement de la structure formant conduit (6) déterminée par un opérateur par le repliement/ta dilatation de la structure formant conduit (6) à l'aide des moyens interactifs (54, 56, 74, 58, 62) dans la zone de suspension (4) et sur la structure formant conduit, et, en outre, de telle manière que les déformations de la couche intérieure (16) dans les parties repliées (52) de la structure formant conduit (6) sont arrêtées.

18. Structure formant conduit (6) selon l'une quelconque des revendications 2 à 17, **caractérisée en ce qu'**elle comprend des moyens pour récupérer le travail du volume sous pression produit par le gonflage des vessies (30).

19. Structure formant conduit (6) selon l'une quelconque des revendications 2 à 18, **caractérisée en ce qu'**elle comprend des moyens pour récupérer le travail du volume sous pression produit par le flot tombant par gravité (2) sur les vessies (30) et leur teneur en air.
